# FASCICULE DE BREVET EUROPEEN

(11) **EP 2 513 609 B1**
(45) Date de publication et mention de la délivrance du brevet: **07.05.2014**
(21) Numéro de dépôt: 10795650.0
(22) Date de dépôt: 09.12.2010
(51) Int. Cl.: G01D 5/22

(54) **ARRANGEMENT COMPORTANT UN CAPTEUR DE PROXIMITÉ INDUCTIF, ET PROCÉDÉ METTANT EN UVRE UN TEL CAPTEUR**
VORRICHTUNG MIT INDUKTIVEM NÄHERUNGSSENSOR UND VERFAHREN ZUR VERWENDUNG SOLCHES SENSORS
ARRANGEMENT COMPRISING AN INDUCTIVE PROXIMITY SENSOR, AND METHOD IMPLEMENTING SUCH A SENSOR

(30) Priorité: 15.12.2009 CH 19222009
(43) Date de publication de la demande: 24.10.2012
(73) Titulaire: POSIC SA, 2000 Neuchâtel (CH)
(72) Inventeur: BERGQVIST, Johan, CH-2014 Bôle (CH); WOULTERS, Sietse, CH-2036 Cormondrèche (CH)
(74) Mandataire: P&TS SA (AG, Ltd.)
(86) Numéro de dépôt international: PCT/EP2010/069242
(87) Numéro de publication internationale: WO 2011/080040

(56) Documents cités:
- EP-A1- 0 805 339
- EP-A1- 0 871 012
- DE-A1-102004 057 206

## Description

### Domaine technique

La présente invention concerne les capteurs de proximité, en particulier les capteurs de proximité de type inductif.

### Etat de la technique

On connait dans l'art antérieur des capteurs de position pour mesurer la position d'un objet ou d'une cible dans un plan horizontal et/ou vertical (orthogonal). Une variante des capteurs de position est constituée par les capteurs de proximité, où il s'agit plus simplement, mais souvent dans des conditions difficiles, de détecter la présence ou l'absence d'une cible devant le capteur.

Les capteurs de proximité utilisent souvent une mesure inductive, et comportent typiquement une ou plusieurs bobines d'excitation générant un champ inductif, et une ou plusieurs bobines de détection générant un courant qui dépend du champ inductif reçu. Lorsqu'un objet métallique, appelé cible, est déplacé à proximité du capteur, le couplage magnétique entre la bobine d'excitation et la ou les bobines de détection est modifié, ce qui génère une variation de la tension induite dans les bobines de détection. Cette variation permet de détecter la présence d'une cible ou de n'importe quelle autre discontinuité dans un objet qui affecte le couplage électromagnétique entre les bobines.

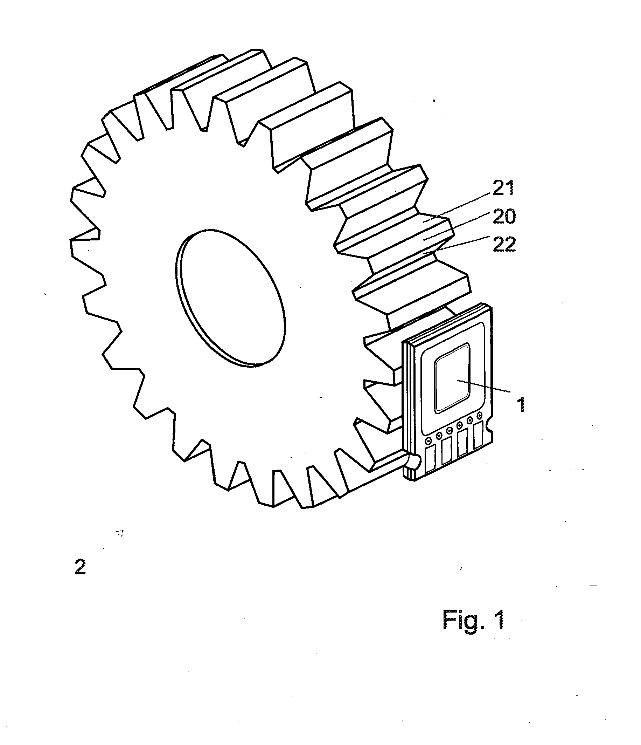

La figure 1 illustre de manière schématique une application d'un tel capteur utilisé 1 pour détecter la proximité de cibles 20. Dans cet exemple, les cibles sont constituées par les dents 20 successives d'une pièce 2 en rotation devant le capteur; le capteur inductif 1 génère un signal qui est modifié à chaque discontinuité de la pièce 2, c'est-à-dire à chaque flanc montant 21 ou descendant 22 des dents 20. Le capteur inductif 1 peut être réalisé à partir de bobines d'excitation et de détection réalisées dans un même plan sur un même substrat de silicium ; ce substrat peut être encapsulé sur un circuit intégré, puis monté sur un circuit imprimé.

EP805339 décrit un dispositif de détection de position et de mouvement comportant une bobine d'excitation et deux bobines de secondaire sur le même circuit intégré. Le champ magnétique reçu par un enroulement secondaire est modifié par la présence d'une pièce (cible) de faible ou de forte perméabilité devant cet enroulement. Ce dispositif permet de détecter la position ou la vitesse d'une pièce mobile structurée en déplacement devant le dispositif.

US2009021248 décrit un autre détecteur de proximité inductif comportant une bobine d'excitation et une bobine de détection recevant un champ magnétique altéré par la présence d'une pièce ferromagnétique à proximité de ces deux bobines.

EP871012 décrit un capteur inductif micro-usiné permettant de détecter la position ou le mouvement d'un objet. Dans un mode de réalisation, le capteur comporte une bobine émettrice et deux paires différentielles des bobines réceptrices captant un champ magnétique altéré par la présence d'une discontinuité dans un objet devant le capteur.

Les capteurs de proximité conventionnels permettent de détecter de manière fiable le passage d'une cible ou d'une discontinuité de la cible. En revanche, l'instant précis de cette discontinuité est souvent difficile à déterminer avec précision. En effet, le couplage inductif augmente progressivement au fur et à mesure que la cible recouvre la bobine de détection, et il est difficile de fixer un seuil à partir duquel un signal indiquant cette discontinuité doit être généré. Par ailleurs, l'amplitude des signaux induits dépend fortement de la distance entre la cible et le capteur, qui est difficile à garantir avec précision ; la variation d'amplitude provoque un déplacement indésirable de l'instant où le signal inductif induit atteint un seuil déterminé.

D'autre part, de nombreux capteurs de proximité sont basés sur des paires de bobines différentielles qui détectent uniquement les discontinuités de la cible. En revanche, l'absence de cible et la présence d'une cible de grande dimension recouvrant les deux bobines de chaque paire génèrent des signaux de sortie identiques, en sorte que ces deux états ne peuvent pas être distingués.

### Bref résumé de l'invention

Un but de la présente invention est de proposer un arrangement avec un capteur de proximité, et un procédé mettant en oeuvre un capteur de proximité qui soient exempt des limitations des procédés et des circuits connus.

En particulier, un but de l'invention est de proposer un procédé pour déterminer avec précision l'instant d'une discontinuité dans une cible au moyen d'un capteur de proximité inductif.

Un autre but est de proposer un arrangement et un procédé pour distinguer entre la présence de cible et l'absence de cible.

Selon l'invention, ces buts sont atteints notamment au moyen d'un procédé mettant en oeuvre un capteur de proximité de type inductif pour détecter une transition dans une cible devant ledit capteur, comportant les étapes suivantes :
génération au moyen d'une bobine d'excitation d'un signal magnétique en direction de ladite cible;
obtention d'un premier signal inductif différentiel avec une première paire de bobines de détection, et d'un deuxième signal inductif différentiel avec une deuxième paire de bobines de détection déphasées par rapport à ladite première paire, lesdits signaux inductifs différentiels dépendant des tensions induites dans lesdites bobines de détection, lesdites tensions induites dépendant de la position de ladite cible ;
détection d'une dite transition à l'instant où la différence entre ledit premier signal inductif différentiel et ledit deuxième signal inductif différentiel atteint une valeur de seuil prédéterminée.

Le capteur inductif mis en oeuvre dans ce procédé comporte donc au moins deux paires de bobines de détection inductives générant des signaux déphasés l'un par rapport à l'autre. L'invention part notamment de la constatation que la différence entre les deux signaux de sortie différentiels s0, s1 fournis par deux paires différentielles déphasées est moins sensible aux variations d'amplitude du signal d'excitation et aux variations de distance entre le capteur et la cible. En particulier, la position du point d'égalité entre les deux signaux est très peu sensible à ces variations.

Dans un mode de réalisation préférentiel, une transition est détectée uniquement lorsque les deux signaux s0 et s1 sont égaux entre eux et qu'ils sont tous deux non-nuls, pour éviter de détecter une transition dans le cas trivial où les deux signaux s0 et s1 sont tous deux nuls.

Dans une autre variante, la détection de transition est limitée à l'intérieur d'une fenêtre au sein de laquelle au moins un des deux signaux s0 ou s1 est supérieur à un seuil V_{Thresh} prédéterminé. Dans une autre variante, cette détection est limitée à l'intérieur d'une fenêtre au sein de laquelle les signaux s0 et s1 sont tous deux supérieurs à un seuil V_{Thresh} prédéterminé. Dans tous les cas, cela permet de renforcer la fiabilité de la détection de transition, en vérifiant l'égalité des deux signaux s0 et s1 uniquement à l'intérieur d'une fenêtre relativement étroite, et d'éviter ainsi des fausses détections en cas d'égalité accidentelle hors de ces fenêtres.

Selon un autre aspect, l'arrangement de l'invention comporte une cible fixe placée devant au moins une des bobines de détection afin d'introduire dans au moins un des signaux inductifs à la sortie des paires différentielles un offset, qui permet de distinguer entre la présence et l'absence de cible.

Cette cible fixe modifie de façon permanente le couplage entre la bobine d'excitation et la ou les bobines de détection recouvertes par la cible fixe, et donc de déséquilibrer au moins une des paires de bobines de détection, même en l'absence de cible mobile.

La cible fixe, ainsi que la cible mobile, peut être réalisée soit dans un matériau ferromagnétique (Fe, FeNi, etc.) ou dans un matériau non-ferromagnétique mais conducteur (Cu, Al, laiton, etc.). Bien évidemment les matériaux ferromagnétiques possèdent aussi une certaine conductivité électrique, mais qui est normalement négligeable. Par exemple, la cible mobile peut être constituée par une dent d'une roue dentée, souvent dans un matériau ferromagnétique, ou par une piste conductrice (par exemple en cuivre) sur un circuit imprimé PCB. Une cible fixe ou mobile dans un matériau ferromagnétique va augmenter le couplage entre bobines primaire et secondaires ; à l'inverse, une cible dans un matériau conducteur va réduire ce couplage. Sans cible il y a habituellement aussi un couplage, qui va être modifié de manière permanente par la présence d'une cible fixe, ou de façon temporaire lors du passage d'une cible mobile.

La cible fixe est arrangée de manière à modifier de façon permanente le couplage entre la bobine d'émission et une des bobines de détection de chaque paire de bobines différentielles. Comme une seule des deux bobines de chaque paire est affectée, le signal à la sortie de la paire de bobines différentielle est donc affecté par un offset, même en l'absence de cible mobile. Lorsqu'une cible mobile recouvre complètement les deux bobines d'une paire, le couplage avec les deux bobines est augmenté (dans le cas d'une cible dans un matériau ferromagnétique) ou diminué (dans le cas d'une cible dans un matériau conducteur), engendrant un signal à la sortie de la paire qui peut être distingué du signal existant en l'absence de cible mobile. Cette configuration permet ainsi de distinguer entre l'absence de cible et la présence d'une longue cible, générant des signaux induits différents.

### Brève description des figures

Des exemples de mise en oeuvre de l'invention sont indiqués dans la description illustrée par les figures annexées dans lesquelles :

La figure 1 déjà décrite illustre un exemple d'application d'un arrangement comportant un capteur de proximité selon l'invention.

La figure 2 illustre un exemple particulier de circuits de détection de proximité comportant une bobine d'excitation et quatre bobines de détection déphasées, arrangées en deux paires différentielles.

La figure 3A illustre les signaux s0, s1 à la sortie des deux paires différentielles lorsqu'une cible de faible largeur est déplacée devant le capteur.

La figure 3B illustre les signaux s0, s1 à la sortie des deux paires différentielles lorsqu'une cible de grande largeur est déplacée devant le capteur.

La figure 4 est une vue de dessus d'un arrangement comportant un capteur de proximité inductif, une cible fixe et une cible mobile.

La figure 5 illustre les signaux s0, s1 à la sortie des deux paires différentielles lorsqu'une cible de grande largeur est déplacée devant l'arrangement de la figure 4, la cible fixe étant réalisée dans un matériau ferromagnétique.

### Exemple(s) de mode de réalisation de l'invention

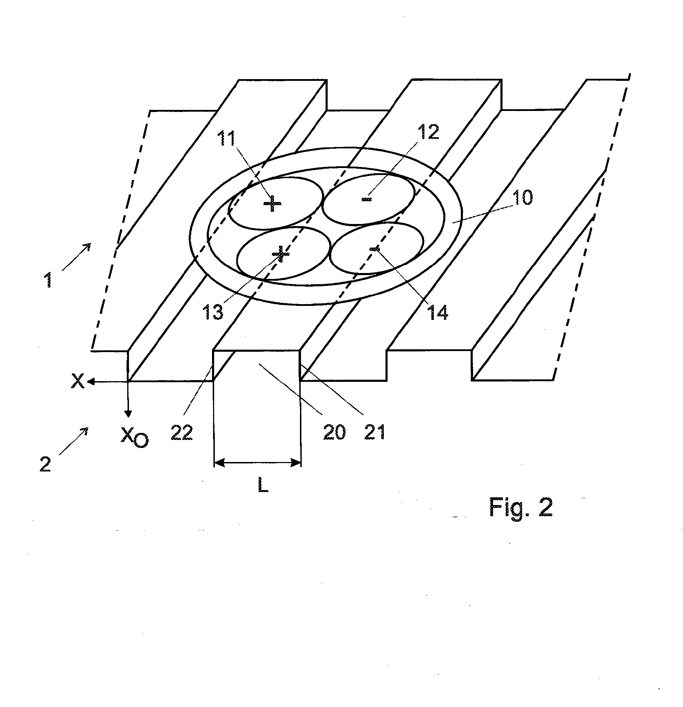

La figure 2 illustre une disposition des bobines dans un capteur de proximité inductif 1 selon un mode de réalisation de l'invention. Dans cet exemple, le capteur comporte une seule bobine d'excitation 10 de grand diamètre et quatre bobines de détection 11, 12, 13 14 arrangées en deux paires différentielles 11-12 et 13-14. Les deux bobines connectées en série dans chaque paire différentielles sont en opposition de phase, ce qui permet de fournir à la sortie de chaque paire 11-12 et 13-14 respectivement un signal différentiel dans lequel le mode commun est supprimé, et qui est donc moins sensible aux perturbations dues aux variations d'amplitude du signal d'excitation ou aux variations de la distance à la pièce 2. Sur la figure, les deux bobines « positives » 11, 13 marquées d'un plus sont connectées de façon à ce que le signal induit à la sortie de la paire augmente lorsque le couplage avec la bobine d'excitation 10, tandis que les deux bobines « négatives » 12, 14 sont connectées dans l'autre sens de manière à provoquer une diminution de ce signal induit si le couplage augmente.

Le signal d'excitation est typiquement un signal haute fréquence (HF) d'environ 1 MHz, et génère une tension induite dans les bobines de détection. L'intensité de la tension induite dépend du couplage électromagnétique entre la bobine d'excitation et les bobines de détection, et est donc modifiée par la présence d'une cible à proximité du capteur.

Les bobines 10 à 14 et le circuit électronique d'interface et de traitement du signal sont avantageusement intégrés sur un substrat semiconducteur, par exemple de silicium, le tout occupant typiquement une surface inférieure à 10 mm². Un circuit électronique analogique et numérique de traitement de signal peut être réalisé sur le même substrat. Le circuit intégré ainsi formé peut ensuite être encapsulé puis monté sur un circuit imprimé rigide ou flexible, par exemple avec des techniques de type chip-on-board ou flip-chip. L'invention peut cependant aussi être appliquée à des bobines discrètes montées par exemple sur un circuit imprimé et connectées à un circuit électronique sur le même circuit imprimé, ou ailleurs. Dans une autre variante, les bobines sont réalisées à partir de pistes imprimées sur un circuit imprimé simple couche ou multicouches, et sur lequel le circuit électronique peut aussi être monté.

Dans cet exemple, la pièce 2 qui se déplace linéairement au-dessus du capteur 1 comporte une succession périodique de dents (cibles) 20. Le pas L des dents 20 de la pièce 2 correspond dans cet exemple au diamètre des bobines de détection 11 à 14. Il est cependant aussi possible d'employer des espaces entre deux dents métalliques de la cible différents, par exemple des dents ferromagnétiques dont la largeur correspond au tiers de la période, ou des cibles constituées de pistes en cuivre dont la largeur correspond par exemple à deux tiers, ou plus, de la période.

Dans la configuration illustrée, les signaux à la sortie des deux paires de bobines différentielles 11-12 et 13-14 sont approximativement sinusoïdaux et déphasés de 90° l'un par rapport à l'autre, avec une période égale au temps mis par la pièce pour avancer de la longueur 2L selon l'axe x.

Ce capteur de proximité peut également être utilisé pour détecter des mouvements de rotation. Une autre application possible de ce type de capteurs concerne la détection de cibles espacées, voire d'objets uniques. Un exemple est la détection de dents sur une roue comportant une seule dent, ou un nombre limité de dents espacées, ou encore la détection de parties mobiles dans une machine ou un véhicule. Le diamètre des bobines n'est donc pas nécessairement lié aux dimensions de la cible ou des cibles.

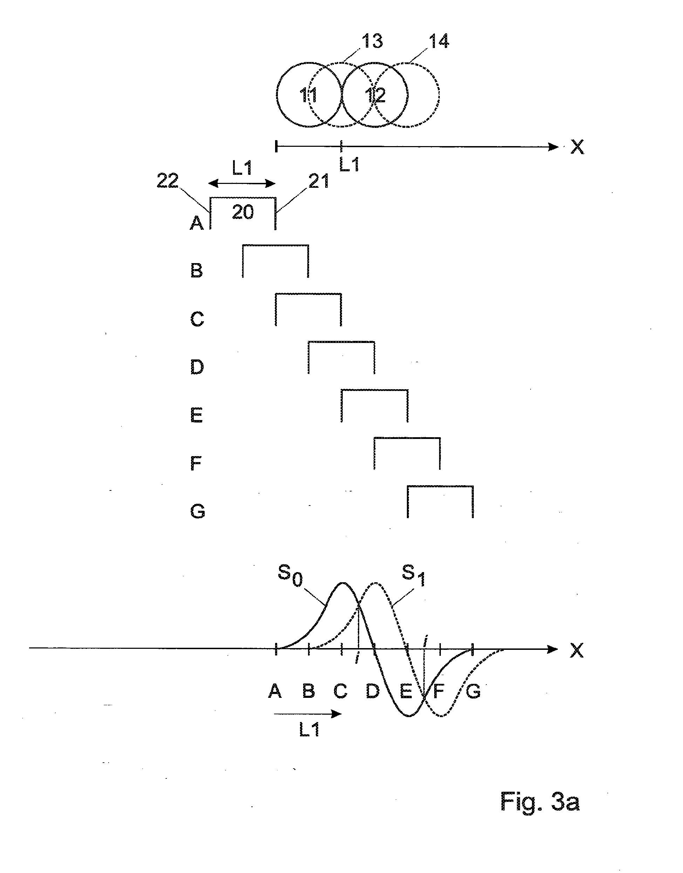

La figure 3a illustre les signaux de sorties s0 respectivement s1 générés par la première paire différentielle 11-12 respectivement par la deuxième paire différentielle 13-14 lorsqu'une cible isolée, par exemple une dent, est déplacée devant le capteur 1 de la figure 2. Dans cet exemple, la largeur L1 de la dent 20 correspond au diamètre des bobines de détection 11 à 14, dont la position longitudinale le long de l'axe x est illustrée schématiquement en haut de la figure. Les lignes A à G illustrent 6 positions longitudinales successives de la dent 20 devant les deux paires de bobines.

A l'instant A, le flanc avant 21 de la cible ferromagnétique 20 arrive devant la bobine de détection 11 ; le couplage avec la bobine d'excitation 10 augmente alors progressivement jusqu'à l'instant C où la dent 20 est parfaitement centrée devant cette bobine, en sorte que la tension s0 augmente. Après C, la partie avant de la cible 20 quitte progressivement la bobine 11 pour recouvrir la bobine opposée 12, en sorte que le signal différentiel s0 décroit très rapidement jusqu'à l'instant D où la dent se trouve à cheval et centrée devant les deux bobines montées en opposition 11 et 12 ; le signal de différence s0 est alors nul.

Après D, la cible 20 continue de se déplacer vers la bobine de détection 12, jusqu'à l'instant E ou le couplage avec cette bobine est maximal ; le signal s0 est alors minimal. La cible continue ensuite de se déplacer selon l'axe x, en sorte que le couplage avec 12 diminue jusqu'à l'instant G où le flanc arrière de la dent quitte la bobine 12; s0 est alors à nouveau nul.

Le signal s1 à la sortie de la seconde paire différentiel est identique à s0, mais déphasé de 90° (L₁/2).

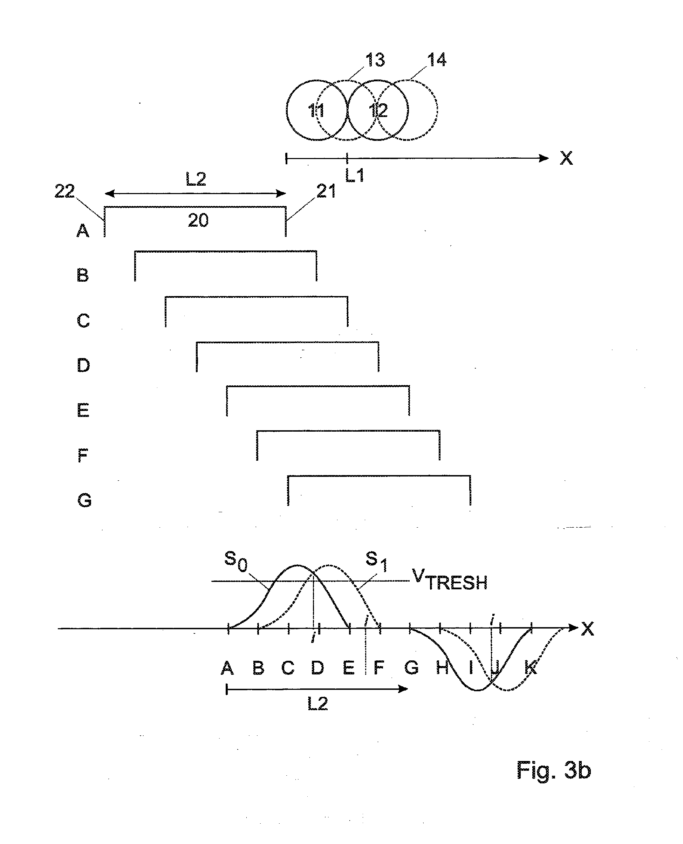

La figure 3B illustre une situation dans laquelle la largeur L2 de la cible mobile 20 ferromagnétique déplacée est beaucoup plus grande que le diamètre L1 des bobines 11 à 14. Entre les instants A et C, la situation est identique à celle commentée plus haut en relation avec la figure 3A. Après C (arrivée de la cible), le flanc avant 21 atteint la deuxième bobine 12, en sorte que le signal s0 décroit. L'arrière 22 de la cible 20 n'atteint cependant pas encore la bobine 11 et la décroissance est donc plus lente que dans l'exemple de la figure 3A ; elle se poursuit jusqu'à l'instant E, à partir duquel les deux bobines 11 et 12 de la première paire sont entièrement recouvertes par la cible 20.

Le signal à la sortie de la paire différentielle 11-12 est alors nul jusqu'à l'instant G (départ de la cible), où le flanc arrière 22 atteint la première bobine 11. Le signal s0 entre les instants G et K évolue ensuite de façon opposée aux instants A à E, au fur et à mesure que la dent 20 libère les deux bobines 11 et 12. La figure 3B illustre également le signal s1 à la sortie de la deuxième paire différentielle 13-14, qui correspond au signal s0 déphasé de 90°.

Un premier problème des capteurs conventionnels, et du capteur décrit jusqu'ici, concerne la précision dans la détection de la position latérale de la cible. Comme on le voit sur les figures 3A et 3B, les signaux s0 et s1 partent de zéro avec une très faible pente, ce qui n'est pas favorable pour placer un seuil de comparateur et détecter de manière précise et fiable les transitions de la cible (flancs 21 et 22) et l'instant d'arrivée ou de départ de la cible. Par ailleurs, le niveau du seuil nécessaire dépend de l'amplitude du signal de détection et de la distance entre le capteur et la cible, qui peut varier selon les applications et selon le type de cible.

On constate cependant, de façon inattendue, que la différence entre les deux signaux de sortie différentiels s0, s1 fournis par les deux paires est peu sensible aux variations d'amplitude du signal d'excitation et aux variations de distance entre le capteur et la cible. En particulier, la position temporelle du point i d'intersection entre les deux signaux s0 et s1 est très peu sensible à ces variations ; elle correspond à une phase de 45° dans le cas positif, respectivement de 225° dans le cas négatif.

Le circuit de détection inclut donc avantageusement des moyens, de type comparateur, pour calculer la différence entre les signaux s0 et s1, et pour générer un signal indiquant une transition à l'instant i lorsque cette différence est nulle, ou lorsqu'elle atteint un seuil prédéterminé. La mesure est donc de type double-différentielle, et effectue une différence entre le signal de sorties de deux paires différentielles.

Avantageusement, une transition est détectée uniquement lorsque les deux signaux s0 et s1 sont tous deux non-nuls (ou supérieurs à un seuil V_{THRESH}) et égaux entre eux, pour éviter de détecter une transition dans le cas trivial où les deux signaux s0 et s1 sont tous deux nuls. Un comparateur peut donc être utilisé pour comparer chacun des deux signaux s0, s1 avec une valeur de seuil, et déterminer s'ils sont nuls ou non nuls. Dans une autre variante, une transition est détectée en cas d'égalité entre s0 et s1 uniquement si au moins un des deux signaux s0 et s1 est supérieurs à un seuil V_{THRESH}.

Le signe d'un des signaux inductifs différentiels s0, s1, ou des deux signaux, peut aussi être déterminé afin de distinguer entre les transitions montantes 21 (arrivée d'une nouvelle cible mobile 2, ou augmentation du couplage dans le cas d'une cible ferromagnétique) et les transitions descendantes 22 (diminution du couplage lorsque la cible ferromagnétique s'éloigne). Dans le cas d'une cible mobile en matériau conducteur, le couplage diminue lors de l'arrivée d'une nouvelle cible mobile, et augmente à nouveau au départ de cette cible.

Les moyens pour détecter la différence entre les deux signaux s0 et s1 peuvent comporter un circuit électronique de type analogique ou numérique. Dans une variante, cette différence est calculée en temps par un logiciel exécuté par un microcontrôleur dans le même circuit intégré que les bobines de détection 11-14, ou par un microprocesseur ou microcontrôleur externe.

Un autre problème avec le capteur de la figure 2 concerne la difficulté à détecter la présence d'une cible. Comme on le voit en particulier sur la figure 3B, les signaux de sortie s0 et s1 sont uniquement modifiés lors d'une transition ou d'une discontinuité de la cible 2, par exemple lors des flancs montants 21 et descendant 22. La valeur de ces deux signaux est cependant égale à zéro aussi bien en l'absence de cible (avant l'instant A) que lorsque la cible recouvre simultanément toutes les bobines de chaque paire différentielle (entre les instants E et G). Il n'est donc pas possible de distinguer entre l'absence de dent ou la présence d'une dent « longue », notamment à la mise en marche du capteur.

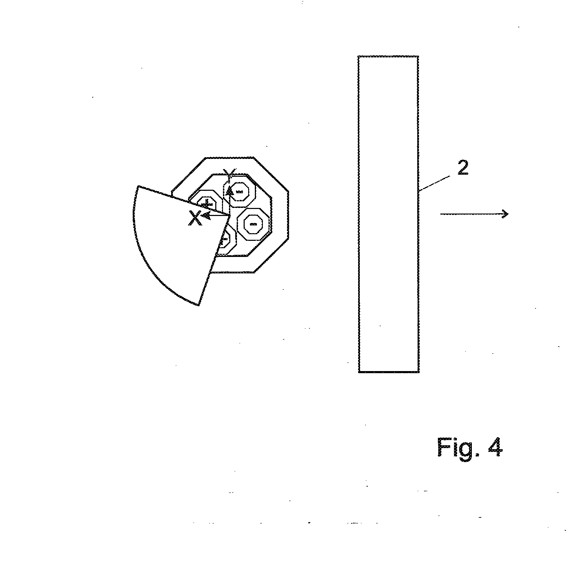

Afin de résoudre ce problème, le circuit de l'invention comporte avantageusement une cible fixe dont la position est déterminée de manière fixe par rapport aux bobines de détection. Un exemple de cible fixe 5 est illustré sur la figure 4. Dans ce mode de réalisation, la cible fixe recouvre partiellement et de façon permanente une des bobines de détection 11 respectivement 13 de chaque paire différentielle, de manière à modifier le couplage magnétique entre ces bobines 11, 13 et la bobine d'excitation 10.

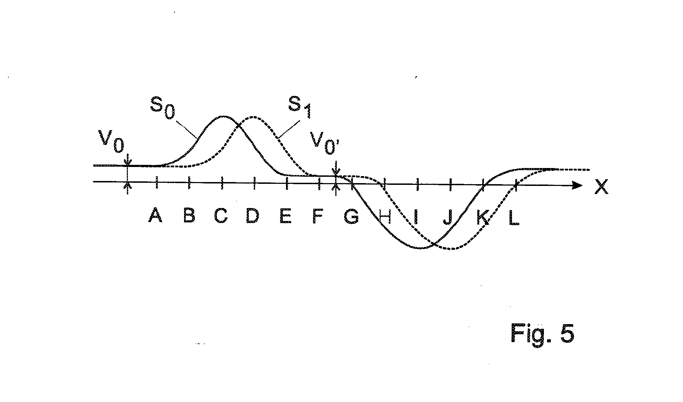

En raison de ce couplage, les tensions induites par les deux bobines de chaque paire ne se compensent plus parfaitement, en sorte que les signaux s0 et s1 sont non nuls même en l'absence de cible mobile 2 à proximité. La cible fixe 5 créé donc artificiellement une tension d'offset Vo en l'absence de cible mobile 2. La figure 5 illustre cette tension d'offset dans les conditions équivalentes à celles de la figure 3B, c'est-à-dire lorsqu'une cible large passe devant le capteur de la figure 4.

Dans un premier cas illustré sur la figure 5, la cible fixe 5 est constituée d'un matériau ferromagnétique, par exemple d'acier, et augmente ainsi le couplage de la bobine d'excitation 10 avec les deux bobines de détection 11, 13 concernées -notamment avant l'instant A. La cible fixe créé ainsi un offset V₀ positif dans cet exemple.

La cible mobile 2 est également dans un matériau ferromagnétique dans cet exemple, et se déplace devant le capteur, jusqu'à recouvrir complètement les quatre bobines de détection 11 à 14 (instants E à G). Entre l'instant A et l'instant E, la tension s0, s1 à la sortie de chaque paire augmente tout d'abord au fur et à mesure que la cible ferromagnétique progresse en recouvrant les bobines « positives » de chaque paire, puis redimininue dès que la cible mobile parvient devant les bobines « négatives » de chaque paire.

Entre les instants E et G, la cible mobile 2 recouvre complètement les quatre bobines de détection, en sorte que les tensions induites dans les deux bobines de chaque paire différentielle se compensent au moins partiellement. L'offset V₀' est donc réduit, et les tensions s0 puis s1 s'approchent de zéro.

Les signaux s0 et s1 permettent donc de distinguer entre l'absence de cible mobile (période avant l'instant A, caractérisée par un offset V₀) et la présence d'une cible mobile recouvrant toutes les bobines (période de F à G, avec un offset réduit V₀').

Dans une variante, la cible mobile 2 est toujours faite d'un matériau ferromagnétique, mais la cible fixe 5 est constituée d'un matériau conducteur électrique non ferromagnétique, par exemple de cuivre, aluminium, laiton etc; les courants de Foucault générés par cette cible fixe 5 ont pour effet de réduire le couplage entre la bobine d'excitation 10 et les bobines 11, 13 partiellement couvertes par cette cible fixe. Une cible fixe conductrice peut avantageusement être réalisée par une piste conductrice sur le circuit imprimé sur lequel sont montées ou imprimées les bobines.

Dans une autre variante, les deux cibles fixes et mobiles sont toutes deux réalisées dans un matériau conducteur qui a pour effet de réduire le couplage entre bobines.

Enfin, il est aussi possible dans une variante d'employer une cible mobile 2 dans un matériau conducteur et une cible fixe 5 faite d'un matériau ferromagnétique.

Il est aussi possible d'employer une cible fixe 5 qui recouvre une seule bobine de détection et affecte ainsi une seule des deux paires différentielles ; cette variante a l'avantage de ne pas réduire la gamme dynamique de l'autre paire différentielle.

Par ailleurs, on constate que l'utilisation d'une cible fixe 5 pour créer un offset n'affecte pas la possibilité de détecter précisément l'instant i d'une transition de la cible ; la différence entre les deux signaux de sortie différentiels s0, s1 est nulle à un instant précis et reproductible même en présence de cible fixe.

Il est cependant avantageux d'employer une cible fixe 5 qui recouvre seulement partiellement les différentes bobines de détection concernées, dont la tension induite reste ainsi affectée par la cible mobile. Cela permet d'effectuer une détection précise de la position latérale de la cible avec le procédé décrit plus haut, et de maintenir une gamme dynamique de mesure suffisante.

La cible fixe 5 peut avantageusement être réalisée au moyen d'une couche de matériau ferromagnétique ou non ferromagnétique déposée par exemple sur le circuit imprimé sur lequel le capteur est monté. La cible fixe est par exemple avantageusement réalisée par une couche métallique sur une autre piste ou couche dudit circuit imprimé que la piste ou couche sur laquelle le circuit intégré est monté. Cette variante permet de réaliser une cible fixe sans modifier le circuit intégré.

Alternativement, il est aussi possible de réaliser une cible fixe 5 à l'intérieur du circuit intégré contenant les bobines de détection 11-14, ou en un autre endroit.

D'autres moyens peuvent être mis en oeuvre pour déséquilibrer une ou plusieurs paires de bobines différentielles et créer un offset différent en l'absence de dent ou en présence d'une dent recouvrant simultanément toutes les bobines d'une paire différentielle. Par exemple, il est possible de réaliser des paires de bobines différentielles constituées de deux bobines différentes, par exemple des bobines de dimensions différentes ou avec des nombres de spires différents, afin de créer un offset.

D'autre part, il est aussi possible d'exploiter le signal à la sortie d'une bobine, ou de plusieurs bobines connectées en série (plutôt qu'en différentiel) afin de déterminer l'amplitude du signal reçu, et donc la distance à la cible et/ou l'amplitude du signal d'excitation.

Par ailleurs, l'invention peut aussi être mise en oeuvre avec des capteurs ou des systèmes comportant un nombre indifférent de paires différentielles inductives, par exemple 1, 2 ou N paires.

## Revendications

1. Procédé mettant en oeuvre un capteur de proximité de type inductif (1) pour détecter une transition (21, 22) dans une cible (2) devant ledit capteur, comportant les étapes suivantes :
génération au moyen d'une bobine d'excitation (10) d'un signal magnétique en direction de ladite cible;
obtention d'un premier signal inductif différentiel (s0) avec une première paire de bobines de détection (11-12), et d'un deuxième signal inductif différentiel (s1) avec une deuxième paire de bobines de détection (13-14) déphasées par rapport à ladite première paire, lesdits signaux inductifs différentiels dépendant des tensions induites dans lesdites bobines de détection (11-14), lesdites tensions induites dépendant de la position de ladite cible (2) ;
détection d'une dite transition à l'instant (i) où la différence entre ledit premier signal inductif différentiel (s0) et ledit deuxième signal inductif différentiel (s1) atteint une valeur de seuil prédéterminée.

2. Le procédé de la revendication 1, dans lequel le signe d'au moins un desdits signaux inductifs différentiels (s0, s1) est utilisé pour distinguer entre l'arrivée d'une cible devant lesdites bobines de détection (11-14) et le départ d'une cible s'éloignant de ces bobines de détection.

3. Le procédé de l'une des revendications 1 ou 2, dans lequel une transition est détectée si et seulement si lesdits premiers et deuxièmes signaux inductifs différentiels (s0, s1) sont non nuls et égaux entre eux.

4. Le procédé de l'une des revendications 1 à 3, dans lequel une transition est détectée uniquement lorsque ledit premier signal inductif différentiel (s0) et/ou ledit deuxième signal inductif différentiel (s1) sont supérieurs à un seuil (V_{Thresh}).

5. Le procédé de l'une des revendications 1 à 4, dans lequel ladite bobine d'excitation (10) et lesdites bobines de détection (11-14) sont réalisés sur un même substrat semiconducteur.

6. Le procédé de la revendication 5, dans lequel la différence entre ledit premier signal inductif différentiel (s0) et ledit deuxième signal inductif (s1) est obtenue au moyen d'un comparateur sur ledit substrat semiconducteur.

7. Le procédé de la revendication 5, dans lequel la différence entre ledit premier signal inductif différentiel (s0) et ledit deuxième signal inductif (s1) est obtenue au moyen d'un logiciel exécuté par un microcontrôleur sur ledit substrat semiconducteur.

8. Le procédé de l'une des revendications 1 à 7, dans lequel une cible fixe (5) est placée de manière permanente devant au moins une desdites bobines de détection (10-14), de manière à créer un offset sur ledit premier signal inductif différentiel (s0) et sur ledit deuxième signal différentiel (s1), ledit offset étant augmenté ou réduit par la présence d'une cible mobile (2).

9. Le procédé de la revendication 8, dans lequel au moins un desdits signaux inductifs différentiels (s0, s1) est comparé à une valeur de seuil afin de distinguer entre la présence et l'absence d'une cible mobile (2).

10. Arrangement comportant :
une bobine d'excitation (10) pour émettre un champ inductif d'excitation en direction d'une cible (2) ;
une première paire de bobines de détection (11-12) montées de façon différentielle et agencées pour générer un premier signal inductif différentiel (s0) dépendant de ladite cible ;
une deuxième paire de bobines de détection (13-14) montées de façon différentielle et agencées pour générer un deuxième signal inductif différentiel (s1) dépendant de ladite cible et déphasée par rapport au premier signal inductif différentiel (s0) ;
un comparateur pour obtenir la différence entre ledit premier signal inductif différentiel et ledit deuxième signal inductif différentiel, et pour générer un signal de transition à l'instant (i) où ladite différence atteint une valeur de seuil prédéterminée.

11. L'arrangement de la revendication 10, comportant en outre une cible fixe (5) pour modifier le couplage entre la bobine d'excitation (10) et au moins une bobine de détection (11-14), de manière à introduire de façon permanente dans au moins un desdits signaux inductifs différentiels (s0, s1) un offset (Vo) permettant de distinguer entre la présence et l'absence de cible.

12. L'arrangement de la revendication 11, dans lequel ladite cible fixe (5) est réalisée dans un matériau ferromagnétique de manière à augmenter le couplage entre ladite bobine d'excitation (10) et la ou les bobines de détection (11, 13) devant lesquelles ladite cible fixe est placée.

13. L'arrangement de la revendication 11, dans lequel ladite cible fixe (5) est réalisée dans un matériau conducteur non ferromagnétique de manière à réduire le couplage entre ladite bobine d'excitation et le ou les bobines de détection devant lesquelles ladite cible fixe est placée.

14. L'arrangement de l'une des revendications 10 à 13, comportant un circuit imprimé sur lequel est monté un circuit intégré incluant lesdites bobines (10-14),
ladite cible fixe (5) étant constituée par une couche métallique sur une autre piste ou couche dudit circuit imprimé que la piste ou couche sur laquelle est monté ledit circuit intégré.

15. L'arrangement de l'une des revendications 10 à 14, dans lequel ladite cible mobile (2) est constituée par une pièce de machine en matériau ferromagnétique.

16. L'arrangement de l'une des revendications 10 à 15, dans lequel ladite cible mobile (2) est constituée par une piste conductrice sur un circuit imprimé.

17. L'arrangement de l'une des revendications 10 à 16, dans lequel ladite bobine d'excitation (10) et lesdites bobines de détection (11-14) sont réalisées sur un même substrat semiconducteur.

18. L'arrangement de l'une des revendications 10 à 17, dans lequel ladite cible fixe (5) recouvre partiellement au moins une des bobines de détection (11, 13), le couplage entre la ou les dites bobine de détection partiellement recouvertes et la bobine d'excitation (10) étant modifié par la présence d'une cible mobile (2).

## Patentansprüche

1. Verfahren zur Implementierung eines Annäherungssensors (1) des induktiven Typs zum Detektieren eines Übergangs (21, 22) in einem Zielobjekt (2) vor dem Sensor, aufweisend die folgenden Schritte:
Erzeugen mittels einer Erregerspule (10) ein magnetisches Signal in Richtung des Zielobjekts (2);
Erhalten eines ersten differentiellen induktiven Signals (s0) mit einem ersten Paar Detektionsspulen (11-12) und eines zweiten differentiellen induktiven Signals (s1) mit einem zweiten Paar von Detektionsspulen (13-14), die Phasenverschoben zu dem ersten Paar (11-12) sind, wobei die differentiellen induktiven Signale von den in den Detektionsspulen (11-14) induzierten Spannungen abhängt, wobei die induzierten Spannungen von der Position des Zielobjekts (2) abhängen;
Detektieren eines Übergangs in dem Moment (i), wenn der Unterschied zwischen dem ersten differentiellen induktiven Signal (s0) und dem zweiten differentiellen induktiven Signal (s1) einen vorbestimmten Schwellwert erreicht.

2. Verfahren nach Anspruch 1, wobei das Vorzeichen von mindestens einem der differentiellen induktiven Signale (s0, s1) zur Unterscheidung zwischen der Ankunft des Zielobjekts vor den Detektionsspulen (11-14) und dem Weggang des Zielobjekts, das sich von den Detektionsspulen entfernt.

3. Verfahren nach Anspruch 1 oder 2, wobei ein Übergang detektiert wird, wenn und nur wenn das erste und zweite differentielle induktive Signal (s0, s1) ungleich Null sind und den gleichen Wert haben.

4. Verfahren nach einem der Ansprüche 1 bis 3, wobei ein Übergang nur detektiert wird, wenn das erste differentielle induktive Signal (s0) und/oder das zweite differentielle induktive Signal (S1) grösser als ein Schwellwert (V_{Thresh}) ist.

5. Verfahren nach einem der Ansprüche 1 bis 4, wobei die Erregerspule (19) und die Detektionsspulen (11-14) auf dem gleichen Halbleitersubstrat realisiert sind.

6. Verfahren nach Anspruch 5, wobei der Unterschied zwischen dem ersten differentiellen induktiven Signal und dem zweiten differentiellen induktiven Signal mittels einer Vergleichsvorrichtung auf dem Halbleitersubstrat erhalten wird.

7. Verfahren nach Anspruch 5, wobei der Unterschied zwischen dem ersten differentiellen induktiven Signal (s0) und dem zweiten differentiellen induktiven Signal (s1) mittels einer Software erhalten wird, die in einem Mikrocontroller auf dem Halbleitersubstrat ausgeführt wird.

8. Verfahren nach einem der Ansprüche 1 bis 7, wobei ein stationäres Zielobjekt (5) in dauerhafter Weise vor mindestens eine der Detektionsspulen (11-14) angeordnet ist, um so einen Offset zwischen dem ersten differentiellen induktiven Signal (s0) und dem zweiten differentiellen induktiven Signal (s1) zu erzeugen, wobei dieser Offset durch die Gegenwart eines beweglichen Zielobjekts (2) vergrössert oder verkleinert wird.

9. Verfahren nach Anspruch 8, wobei mindestens eines der differentiellen induktiven Signale (s0, s1) mit einem Schwellwert verglichen wird, um zwischen der Gegenwart und der Abwesenheit eines beweglichen Zielobjekts (2) zu unterscheiden.

10. Anordnung aufweisend:
eine Erregerspule (10) zum Aussenden eines induktiven Erregerfelds in Richtung eines Zielobjekts (2);
ein erstes Paar Detektionsspulen (11-12) montiert in einer differentiellen Art und angeordnet zum Erzeugen eines ersten differentiellen induktiven Signals (s0), das von dem Zielobjekt abhängig ist;
ein zweites Paar Detektionsspulen (13-14) montiert in einer differentiellen Art und angeordnet zum Erzeugen eines zweiten differentiellen induktiven Signals (s1), das von dem Zielobjekt abhängig ist und gegenüber dem ersten differentiellen induktiven Signal (s0) phasenverschoben ist;
eine Vergleichsvorrichtung zum Erhalten eines Unterschieds zwischen dem ersten differentiellen induktiven Signal (s0) und dem zweiten differentiellen induktiven Signal (s1) und zum Erzeugen eines Übergangssignals in einem Zeitpunkt (i), wenn der Unterschied einen vorbestimmten Schwellwert erreicht.

11. Anordnung nach Anspruch 10, weiter aufweisend ein stationäres Zielobjekt (5) zum Modifizieren der Koppelung zwischen der Erregerspule (10) und mindestens einer Detektionsspule (11-14), um so in dauerhafter Weise in zumindest einem der differentiellen induktiven Signale (s0, s1) einen Offset (Vo) einzufügen, der eine Unterscheidung zwischen der Gegenwart und der Abwesenheit eines beweglichen Zielobjekts (2) erlaubt.

12. Anordnung nach Anspruch 11, wobei das stationäre Zielobjekt (5) aus einem ferromagnetischen Material hergestellt ist, um so die Koppelung zwischen der Erregerspule (10) und der Detektionsspule oder der Detektionsspulen (11, 13), vor welcher oder welchen sich das stationäre Zielobjekt (5) befindet, zu erhöhen.

13. Anordnung nach Anspruch 11, wobei das stationäre Zielobjekt (5) aus einem nicht-ferromagnetischen Material hergestellt ist, um so die Koppelung zwischen der Erregerspule (10) und der Detektionsspule oder der Detektionsspulen (11, 13), vor welcher oder welchen sich das stationäre Zielobjekt (5) befindet, zu erhöhen.

14. Anordnung nach einem der Ansprüche 10 bis 13, aufweisend eine Leiterplatte, auf welcher ein integrierter Schaltkreis montiert ist, der die Spulen (10-14) aufweist,
wobei das stationäre Zielobjekt (5) aus einer metallischen Schicht auf einer Bahn oder einer Schicht der Leiterplatte besteht, die nicht die gleiche ist, wie die Bahn oder Schicht, auf der der integrierte Schaltkreis montiert ist.

15. Anordnung nach einem der Ansprüche 10 bis 14, wobei das bewegliche Zielobjekt (2) durch ein Maschinenteil aus einem ferromagnetischen Material realisiert ist.

16. Anordnung nach einem der Ansprüche 10 bis 15, wobei das bewegliche Zielobjekt (2) durch eine Leiterbahn auf einer Leiterplatte realisiert ist.

17. Anordnung nach einem der Ansprüche 10 bis 16, wobei die Erregerspule (10) und die Detektionsspulen (11-14) aus einem gleichen Halbleitersubstrat hergestellt sind.

18. Anordnung nach einem der Ansprüche 10 bis 17, wobei das stationäre Zielobjekt (5) teilweise zumindest eine der Detektionsspulen (11, 13) bedeckt, wobei die Koppelung zwischen der teilweise bedeckten Detektionsspule oder der teilweise bedeckten Detektionsspulen und der Erregerspule (10) durch die Gegenwart des beweglichen Zielobjekts (2) modifiziert wird.

## Claims

1. Method implementing an inductive type proximity sensor (1) for detecting a transition (21, 22) in a target (2) in front of said sensor, including the following steps:
generating by means of an excitation coil (10) a magnetic signal directed towards said target;
obtaining a first differential inductive signal (s0) with a first pair of detection coils (11-12) and a second differential inductive signal (s1) with a second pair of detection coils (13-14) that are phase-shifted relative to said first pair, wherein said differential inductive signals depend on the voltages induced in said detection coils (11-14), wherein said induced voltages depend on the position of said target (2);
detecting one said transition at the instant (i) when the difference between said first differential inductive signal (s0) and said second differential inductive signal (s1) reaches a predetermined threshold value.

2. The method of claim 1, wherein the sign of at least one of said differential inductive signals (s0, s1) is used to distinguish between the arrival of a target in front of said detection coils (11-14) and the departure of a target moving away from these detection coils.

3. The method of one of the claims 1 or 2, wherein a transition is detected when and only when said first and second differential inductive signals (s0, s1) are different from zero and equal to one another.

4. The method of one of the claims 1 to 3, wherein a transition is detected only when said first differential inductive signal (s0) and/or said second differential inductive signal (s1) are greater than a threshold (V_{Thresh}).

5. The method of one of the claims 1 to 4, wherein said excitation coil (19) and said detection coils (11-14) are made on a same semiconductor substrate.

6. The method of claim 5, wherein the difference between said first differential inductive signal and said second inductive signal is obtained by means of a comparator on said semiconductor substrate.

7. The method of claim 5, wherein the difference between said first differential inductive signal (s0) and said second inductive signal (s1) is obtained by means of a software executed by a microcontroller on said semiconductor substrate.

8. The method of one of the claims 1 to 7, wherein a stationary target (5) is placed in a permanent manner in front of at least one of said detection coils (10-14) so as to create an offset on said first differential inductive signal (s0) and on said second differential signal (s1), said offset being increased or decreased by the presence of a movable target (2).

9. The method of claim 8, wherein at least one of said differential inductive signals (s0, s1) is compared to a threshold value in order to distinguish between the presence and the absence of a movable target (2).

10. Arrangement, including:
an excitation coil (10) for emitting an inductive excitation field directed towards a target (2);
a first pair of detection coils (11-12) mounted in a differential fashion and arranged for generating a first differential inductive signal (s0) depending on said target;
a second pair of detection coils (13-14) mounted in a differential fashion and arranged for generating a second differential inductive signal (s1) depending on said target and phase-shifted relative to the first differential inductive signal (s0);
a comparator for obtaining the difference between said first differential inductive signal and said second differential inductive signal and for generating a transition signal at the instant (i) when said difference reaches a threshold value.

11. The arrangement of claim 10, further comprising a stationary target (5) for modifying the coupling between the excitation coil (10) and at last one detection coil (11-14) so as to introduce in a permanent manner in at least one of said differential inductive signals (s0, s1) an offset (Vo) that enables a distinction between the presence and the absence of target to be made.

12. The arrangement of claim 11, wherein said stationary target (5) is made of a ferromagnetic material so as to increase the coupling between said excitation coil (10) and the detection coil or coils (11, 13) in front of which said stationary target is placed.

13. The arrangement of claim 11, wherein said stationary target (5) is made of a non ferromagnetic conductive material so as to decrease the coupling between said excitation coil and the detection coil or coils in front of which said stationary target is placed.

14. The arrangement of one of the claims 10 to 13, including a printed circuit onto which an integrated circuit including said coils (10-14) is mounted,
said stationary target (5) being constituted of a metallic layer on a track or layer of said printed circuit that is not the same as the track or layer onto which the integrated circuit is mounted.

15. The arrangement of one of the claims 10 to 14, wherein said movable target (2) is constituted by a machine part of a ferromagnetic material.

16. The arrangement of one of the claims 10 to 15, wherein said movable target (2) is constituted by a conductor track on a printed circuit.

17. The arrangement of one of the claims 10 to 16, wherein said excitation coil (10) and said detection coils (11-14) are made on a same semiconductor substrate.

18. The arrangement of one of the claims 10 to 17, wherein said stationary target (5) covers partly at least one of the detection coils (11, 13), wherein the coupling between said partly covered detection coil or coils and the excitation coil (10) is modified by the presence of a movable target (2).
